# FASCICULE DE BREVET EUROPEEN

(11) **EP 3 437 931 B1**
(45) Date de publication et mention de la délivrance du brevet: **08.07.2020**
(21) Numéro de dépôt: 18186926.4
(22) Date de dépôt: 01.08.2018
(51) Int. Cl.: B60R 13/02, B32B 29/08, B60R 13/08, B31F 1/28, B32B 15/12

(54) **ELÉMENT DE TOIT POUR RIGIDIFIER LE TOIT D'UN VÉHICULE**
DACHELEMENT ZUM AUSSTEIFEN DES DACHS EINES FAHRZEUGS
ROOF ELEMENT FOR RIGIDIFYING THE ROOF OF A VEHICLE

(30) Priorité: 02.08.2017 FR 1757435
(43) Date de publication de la demande: 06.02.2019
(73) Titulaire: ADHEX TECHNOLOGIES, 21300 Chenôve (FR)
(72) Inventeur: DURAND, Hervé, 21000 Dijon (FR); FAVATA, Hervé, 21270 Binges (FR)
(74) Mandataire: Gevers & Orès

(56) Documents cités:
- EP-A1- 2 857 263
- WO-A1-2015/058917

## Description

### Domaine technique

La présente invention concerne un élément de toit et en particulier un panneau intérieur de plafond pour un toit de véhicule pour améliorer la rigidité dudit toit.

### Etat de la technique

Il est bien connu que, dans le domaine de l'automobile, les constructeurs cherchent à diminuer le poids total de leurs véhicules afin d'en réduire la consommation énergétique et d'en abaisser le coût de revient. Ces efforts d'allégement portent en priorité sur les pièces métalliques de carrosserie car elles contribuent significativement au poids total des véhicules.

En particulier, ces efforts d'allégement portent sur le pavillon de toit des véhicules dans la mesure où sa surface est grande et où il ne constitue pas une pièce structurante ou de sécurité en cas de chocs frontal ou latéral. Ainsi, la réduction permanente de l'épaisseur de la tôle métallique du pavillon de toit a conduit à fabriquer des pavillons de toit de moins en moins rigides, extrêmement souples et déformables. Les pavillons de toit présentent désormais une déformation systématique et visible à l'œil nu, cette déformation étant accentuée par la brillance et le glacis surfacique de la peinture appliquée sur l'extérieur des pavillons.

Par ailleurs, la réduction de l'épaisseur des pavillons de toit métalliques a également amplifié les phénomènes de résonances vibratoires du pavillon, engendrés pour l'essentiel par la transmission par voie « solidienne » de vibrations dues au roulage et au groupe moteur du véhicule.

Afin de remédier à ces inconvénients, on a déjà imaginé des dispositifs dits raidisseurs de toit permettant de limiter la déformation des pavillons de toit et de réduire les vibrations.

C'est le cas notamment de la demande de brevet français FR 2 299 964 qui décrit un procédé de fabrication de panneaux en forme à base de carton et de mousse. Le procédé consiste à asperger avec une solution d'élastomère, l'une des faces d'une plaque de carton et d'une plaque de mousse, à poser la face non aspergée de la plaque de mousse sur celle aspergée de la plaque de carton, à mettre en place sur la face aspergée de la mousse, le recouvrement de finition, à retourner le sandwich ainsi formé pour permettre dans l'opération suivante, l'aspersion de la face vierge de la plaque de carton avec la solution d'élastomère, à déposer sur cette face enduite des bandes ou une plaque de mousse et à mettre cet ensemble dans un moule dans lequel le panneau sera embouti à la forme désirée, et maintenu dans cette forme grâce à la polymérisation de la solution d'élastomère.

Ce type de panneau, outre le coût de fabrication trop élevé, ne procure pas une absorption suffisante des vibrations notamment.

De nombreuses autres solutions ont été imaginées. On connait notamment des éléments de toit, raidisseurs, décrits dans les demandes de brevet JP10071646, DE 19702581, JP8332904 et EP 1 298 034.

Tous ces éléments de toit présentent l'inconvénient d'être onéreux à fabriquer et/ou induisent un temps de montage trop long grevant le coût de fabrication du véhicule.

La solution la plus fréquemment mise en œuvre à l'heure actuelle consiste à d'abord coller une ou plusieurs plaques dites IFF, selon l'acronyme de « Insonorisant Fusible en Feuille » sur la paroi intérieure du pavillon de toit, puis à rapporter, par collage superposé, un raidisseur en carton rigide sur le pavillon. Le collage du carton est réalisé par des adhésifs double face mousse épais permettant de résorber le jeu dimensionnel délimité par l'épaisseur des plaques IFF.

Malgré cette précaution, la limitation de la pression de la plaque IFF sur le pavillon est aléatoire et ne permet pas de garantir une absence totale de déformation du pavillon.

Par ailleurs, en raison d'un volume d'air confiné important entre le pavillon et le raidisseur en carton, les bruits de tambourinement des gouttes de pluie sur le pavillon sont amplifiés, l'espace d'air interstitiel agissant comme une caisse de résonance acoustique.

De plus, ce type de solution procure un surcoût substantiel en terme de main d'oeuvre et en temps d'occupation de la ligne de montage ce qui grève le coût de fabrication du véhicule. En effet, l'opérateur en bord de ligne de montage doit d'abord positionner précisément, puis coller les plaques IFF sur le pavillon de toit. Ensuite, il doit peler manuellement et individuellement les films protecteurs anti-adhérents de toutes les bandes d'adhésif double face préalablement collées sur le carton raidisseur. Il est bien connu que ces opérations d'amorçage, puis de décomplexage du film protecteur d'un adhésif double face mousse sont fastidieuses et délicates. Les risques inhérents à l'enlèvement d'un film protecteur d'une bande d'adhésif double face mousse sont le décollement local de la bande adhésive du carton, la déchirure partielle de la mousse et la pollution de l'adhésif.

Afin de remédier à ces inconvénients, on a déjà imaginé des éléments de toit à base de carton ondulé. C'est le cas notamment de la demande de brevet européen EP 2 857 263, montrant le préambule de la revendication 1, et de la demande de brevet français FR 3 012 105 déposées par la demanderesse.

Le document EP 2 857 263 décrit un élément de toit, en particulier un panneau intérieur de plafond pour un toit de véhicule, pour améliorer la rigidité dudit toit comportant une pièce en carton ondulé et au moins une pièce apte à absorber les vibrations, ladite pièce amortissante étant solidaire de la pièce en carton ondulé. Ladite pièce est obtenue dans du carton ondulé à double cannelure dans lequel est formé au moins un creux, ladite pièce amortissante s'étendant dans ledit creux de telle sorte que la face supérieure de ladite pièce amortissante affleure la face supérieure de la pièce en carton ondulé. Afin d'assurer la fixation de l'élément de toit sur le pavillon de toit, la pièce en carton ondulé comporte une pluralité de bandes d'adhésif sensible à la pression déposées sur la face supérieure de ladite pièce en carton ondulé et sur la paroi de fond du creux recevant la pièce amortissante. Ladite pièce amortissante présente un grammage surfacique compris entre 4 et 15 Kg/m² et consiste en une plaque de masse lourde bitumeuse.

Le document FR 3 012 105 décrit également un panneau raidisseur pour panneau galbé en tôle. Ledit panneau raidisseur est obtenu dans du carton ondulé à double cannelure et comprend une série de découpes parallèles traversant partiellement l'épaisseur du panneau en carton depuis la face supérieure du panneau en carton et une série de bandes adhésives recouvrant respectivement lesdites découpes parallèles.

Toutefois, ce type d'élément de toit est particulièrement difficile à réaliser en raison de la difficulté de procéder à la découpe à mi-chair du carton à double cannelure de sorte que de nombreuses pièces doivent être mises au rebus, grevant ainsi le coût de fabrication.

### Divulguation de l'invention

L'un des buts de l'invention est donc de remédier à au moins un de ces inconvénients en proposant un élément de toit de conception simple et moins onéreuse tout en procurant une limitation efficace des vibrations, des bruits de tambourinement des gouttes de pluie et des déformations et un montage rapide et aisé.

A cet effet et conformément à l'invention, il est proposé un élément de toit, en particulier panneau intérieur de plafond pour un toit de véhicule, pour améliorer la rigidité dudit toit comportant une pièce en carton ondulé et au moins une pièce dite amortissante apte à absorber les vibrations, ladite pièce amortissante étant solidaire de la pièce en carton ondulé ; ledit élément de toit est remarquable en ce que ladite pièce en carton ondulé est obtenue dans du carton ondulé à simple cannelure d'épaisseur comprise entre 2 et 6 mm, de coefficient d'ondulation compris entre 1,35 et 1,70, comprenant 120 à 180 cannelures au mètre et dont la somme des grammages de la couverture inférieure et de la couverture supérieure est comprise entre 200 et 635 g/m², et dans lequel est formé au moins un creux, ladite pièce amortissante s'étendant dans ledit creux.

La couverture supérieure de la pièce en carton ondulé présente un grammage surfacique supérieur au grammage surfacique de la couverture inférieure de la pièce en carton ondulé.

De préférence, la résistance à l'absorption d'eau mesurée selon la méthode ISO 535 de l'indice Cobb1800 est inférieure à 155 g/m2 sur chacune des faces du carton,

Par ailleurs, la résistance à l'absorption d'eau mesurée selon la méthode ISO 535 de l'indice Cobb300 est inférieure à 70 g/m2 sur chacune des faces du carton.

De plus, la charge maximale à la pliure du carton mesurée selon la méthode de résistance en flexion 3 points D41 5110 est supérieure à 20 N et la résistance à la flamme mesurée selon la méthode de la combustibilité horizontale D45 1333 (ou FMVSS 302) est inférieure à 100 mm/min dans les sens longitudinal et transversal.

Ladite pièce en carton ondulé comporte une pluralité de bandes d'adhésif sensible à la pression déposées sur la face supérieure de ladite pièce en carton ondulé et sur la paroi de fond du creux recevant la pièce amortissante.

Ladite face supérieure de la pièce amortissante comporte, de préférence, une couche d'un adhésif sensible à la pression.

Par ailleurs, la pièce amortissante présente un grammage surfacique compris entre 4 et 15 Kg/m².

De préférence, la pièce amortissante consiste en une plaque de masse lourde bitumeuse.

Ladite plaque bitumeuse comporte avantageusement des charges minérales et/ou des charges magnétiques.

Par ailleurs, ledit élément de toit comporte un film protecteur coiffant les bandes d'adhésif sensible à la pression déposées sur la face supérieure de la pièce en carton ondulé et la couche d'adhésif sensible à la pression de la face supérieure de la pièce amortissante.

Ledit film protecteur consiste dans une feuille de papier siliconée.

Ledit creux est formé dans la pièce en carton ondulé par une découpe dans la couverture supérieure de la pièce en carton ondulé et par un écrasement de la partie découpée jusqu'à la couverture inférieure.

Lesdites bandes d'adhésif sensible à la pression consistent, de préférence, dans des bandes d'adhésif comportant une première couche d'adhésif sensible à la pression, une couche en mousse et une seconde couche d'adhésif sensible à la pression.

Ladite couche de mousse présente une épaisseur comprise entre 500 et 1300 µm.

Par ailleurs, les couches d'adhésif sensible à la pression (8) présentent une épaisseur comprise entre 50 et 100 µm.

Ladite couche de mousse présente une densité comprise entre 40 Kg/m³ et 160 Kg/m³.

Ladite couche de mousse est obtenue dans de la mousse de Polyéthylène (PE) à cellules fermées réticulée physique.

Par ailleurs, les couches d'adhésif sensible à la pression (8) sont obtenues dans un adhésif acrylique à base solvant auto-réticulant.

De plus, les bandes d'adhésif sensible à la pression présentent une résistance en traction-cisaillement avant vieillissement supérieure ou égale à 0,1 MPa et une résistance en traction-cisaillement après vieillissement supérieure ou égale à 0.2 MPa.

### Brève description des dessins

D'autres avantages et caractéristiques ressortiront mieux de la description qui va suivre de plusieurs variantes d'exécution, données à titre d'exemples non limitatifs, de l'élément de toit conforme à l'invention, en référence aux dessins annexés sur lesquels :
- la figure 1 est une vue en perspective d'un élément de toit suivant l'invention positionné sur un pavillon de toit d'un véhicule automobile,
- la figure 2 est une vue de dessus d'un élément de toit conforme à l'invention,
- la figure 3 est une vue en coupe transversale schématique de l'élément de toit suivant l'invention représenté sur la figure 2,
- la figure 4 est une vue en coupe d'une bande d'adhésif de l'élément de toit suivant l'invention représenté sur la figure 3,

### Mode de réalisation de l'invention

Par souci de clarté, dans la suite de la description, les mêmes éléments ont été désignés par les mêmes références aux différentes figures. De plus, les diverses vues ne sont pas nécessairement tracées à l'échelle.

On décrira ci-après un élément de toit d'un véhicule automobile et plus particulièrement un panneau intérieur de plafond de voiture ; toutefois, il est bien évident que ledit élément de toit suivant l'invention pourra être utilisé pour tout type de véhicule sans pour autant sortir du cadre de l'invention.

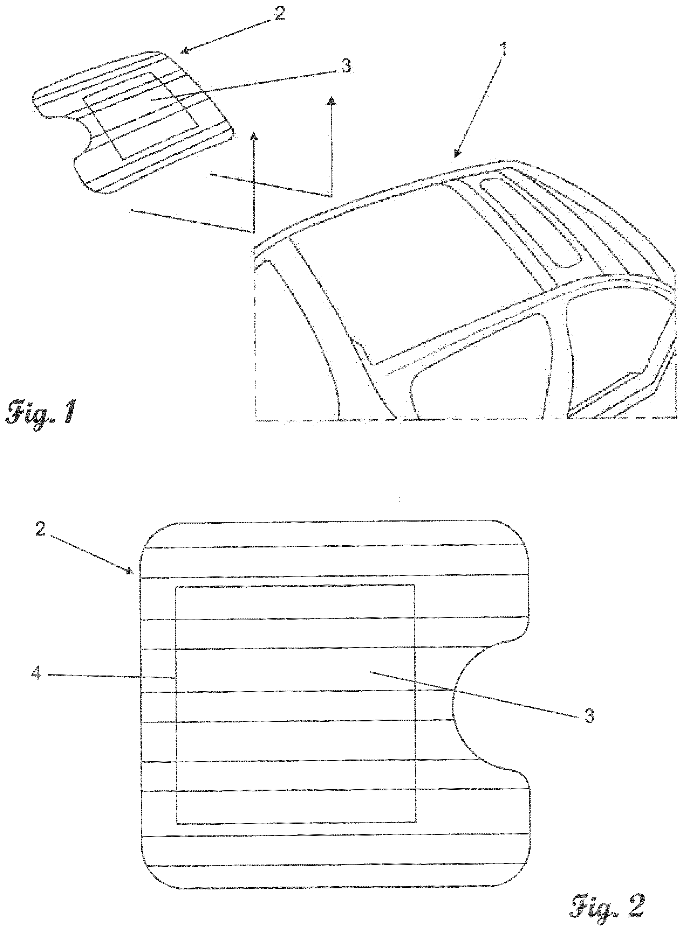

En référence à la figure 1, l'élément de toit suivant l'invention, pour améliorer la rigidité du pavillon de toit d'un véhicule (1) comporte une pièce sensiblement rectangulaire en carton ondulé (2) et une pièce dite amortissante (3), apte à absorber les vibrations et solidaire de la pièce rectangulaire en carton ondulé (2).

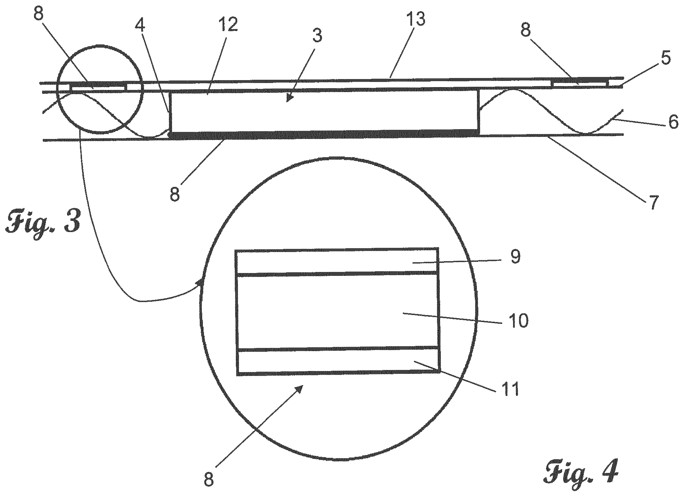

En référence aux figures 2 et 3, ladite pièce sensiblement rectangulaire en carton ondulé (2) est obtenue dans du carton ondulé à simple cannelure dans lequel est formé au moins un creux (4), ladite pièce amortissante (3) s'étendant dans ledit creux (4) de telle sorte que, de préférence, la face supérieure de ladite pièce amortissante (3) affleure la face supérieure de la pièce rectangulaire en carton ondulé (2).

On notera que dans cet exemple particulier de réalisation, l'élément de toit est constitué d'une pièce en carton ondulé de forme sensiblement rectangulaire et d'une unique pièce amortissante également de forme rectangulaire ; toutefois, il est bien évident que la pièce en carton ondulé pourra présenter une forme quelconque et que l'élément de toit pourra comporter une ou plusieurs pièces amortissantes de forme quelconque sans pour autant sortir du cadre de l'invention.

En référence à la figure 3, la pièce en carton ondulé (2) est obtenue dans du carton ondulé à simple cannelure comprenant une couverture supérieure (5), une cannelure (6) et une couverture inférieure (7). Ledit carton ondulé à simple cannelure présente une épaisseur comprise entre 2 et 6 mm, un coefficient d'ondulation compris entre 1,35 et 1,70, 120 à 180 cannelures au mètre et la somme des grammages de la couverture inférieure (7) et de la couverture supérieure (5) est comprise entre 200 et 635 g/m². Selon un premier exemple de réalisation, ledit carton à simple cannelure consiste en la référence 100212016 livrée par la société Jorsa Embalagens Ltda présentant une épaisseur de 4.2 mm, un grammage surfacique total égal à 800 g/m². Les grammages de la couverture supérieure et de la couverture inférieure sont égaux à 260 g/m² et 260 g/m², respectivement. Le coefficient d'ondulation est égal à 1.43 et ce carton simple cannelure présente 140 cannelures au mètre.
La résistance à la flamme mesurée selon la méthode de la combustibilité horizontale D45 1333 (ou FMVSS 302) est inférieure à 100 mm/min dans les sens longitudinal et transversal.

La résistance à l'absorption d'eau mesurée selon la méthode ISO 535 (norme ISO 535:2014 publiée en mars 2014 https://www.iso.org/fr/standard/61486.html) de l'indice Cobb₁₈₀₀ est inférieure à 155 g/m² sur chacune des faces du carton, La résistance à l'absorption d'eau mesurée selon la méthode ISO 535 (norme ISO 535:2014 publiée en mars 2014 https://www.iso.org/fr/standard/61486.html) de l'indice Cobb₃₀₀ est inférieure à 70 g/m² sur chacune des faces du carton. La charge maximale à la pliure du carton mesurée selon la méthode de résistance en flexion 3 points D41 5110 (StandardPSA D41 5110 Publié par PSA le 11/1/1982) est supérieure à 20 N. La force en flexion pour une déformation de 5 mm mesurée selon la méthode D41 1643 (Renault D41 1643 publié en 1998) est égale à 2.5 N.

Selon un second exemple de réalisation, ledit carton à simple cannelure consiste en la référence C584 livrée par la société I PAPER présentant une épaisseur de 4.2 mm, un grammage surfacique total égal à 630 g/m². Les grammages de la couverture supérieure et de la couverture inférieure sont égaux à 226 g/m² et 186 g/m², respectivement. Le coefficient d'ondulation est égal à 1.40 et ce carton simple cannelure présente 130 cannelures au mètre. La résistance à la flamme mesurée selon la méthode de la combustibilité horizontale D45 1333 (StandardPSA D45 1333 publié par PSA le 03/12/2003) (ou la norme américaine FMVSS 302 publiée le 24 septembre 1998) est inférieure à 100 mm/min dans les sens longitudinal et transversal.
La résistance à l'absorption d'eau mesurée selon la méthode ISO 535 (norme ISO 535:2014 publiée en mars 2014 https://www.iso.org/fr/standard/61486.html) de l'indice Cobb₁₈₀₀ est inférieure à 155 g/m² sur chacune des faces du carton. La résistance à l'absorption d'eau mesurée selon la méthode ISO 535 (norme ISO 535:2014 publiée en mars 2014 https://www.iso.org/fr/standard/61486.html) de l'indice Cobb₃₀₀ est inférieure à 70 g/m² sur chacune des faces du carton.

La charge maximale à la pliure du carton mesurée selon la méthode de résistance en flexion 3 points D41 5110 (StandardPSA D41 5110 Publié par PSA le 11/1/1982) est supérieure à 20 N. La force en flexion pour une déformation de 5 mm mesurée selon la méthode D41 1643 (Renault D41 1643 publié en 1998) est égale à 1.5 N.

De plus, de manière avantageuse, la couverture supérieure (5) de la pièce en carton ondulé (2) présente un grammage surfacique supérieur au grammage surfacique de la couverture inférieure (7) de la pièce en carton ondulé (2).

Par ailleurs, en référence à la figure 3, ledit creux (4) est formé dans la pièce en carton ondulé (2) par une découpe dans la couverture supérieure (5) et par un écrasement de la partie découpée jusqu'à la couverture inférieure (7). La découpe dans la couverture supérieure (5) de la pièce en carton ondulé (2) est obtenue par tout moyen de découpe approprié bien connu de l'homme du métier.

Afin d'assurer la fixation de l'élément de toit sur le pavillon de toit, la pièce en carton ondulé (2) comporte une pluralité de bandes d'adhésif sensible à la pression (8) déposées sur la face supérieure de ladite pièce en carton ondulé (2), c'est-à-dire sur la couverture supérieure (5), et sur la paroi de fond du creux (4) recevant la pièce amortissante (3).

En référence à la figure 4, les bandes d'adhésif sensible à la pression (8) consistent dans des bandes d'adhésif comportant une première couche d'adhésif sensible à la pression (9), une couche en mousse (10) et une seconde couche d'adhésif sensible à la pression (11). Ladite couche en mousse (10) présente de préférence une épaisseur comprise entre 500 et 1300 µm et les couches d'adhésif sensible à la pression (9) et (11) présentent une épaisseur comprise entre 50 et 100 µm. Lesdites couches d'adhésif sensible à la pression (9) et (11) sont obtenues dans un adhésif acrylique à base solvant auto-réticulant. De plus, la couche de mousse présente une densité comprise entre 40 Kg/m³ et 160 Kg/m³ et est obtenue dans de la mousse de Polyethylène (PE) à cellules fermées réticulée physique. Par exemple, les bandes d'adhésif (8) sensible à la pression sont constituées d'une mousse de PolyEthylène réticulé à cellules fermées, noire, densité 143 Kg/m³, épaisseur 0.8 mm, comprenant un protecteur film ou papier siliconé 2 faces différenciées, et dont les masses adhésives sur chaque face de la mousse sont constituées de masses adhésives acryliques solvant auto-réticulables fournies par la société CYTEC sous la référence Gelva GMS 2835, 85 g/m², après traitement Corona des 2 faces de la mousse et enduction par transfert de la masse adhésive. Alternativement, les bandes d'adhésif (8) sensible à la pression sont constituées d'une mousse de Polyéthylène réticulé à cellules fermées, blanche, densité 55 Kg/m³, épaisseur 1mm, comprenant un protecteur film ou papier siliconé 2 faces différenciées, et dont les masses adhésives sur chaque face de la mousse sont constituées de masses adhésives acryliques solvant auto-réticulables fournies par la société CYTEC sous la référence Gelva GMS 2835, 80 g/m² sur chaque face, après traitement Corona des 2 faces de la mousse et enduction par transfert de la masse adhésive.

Par ailleurs, en référence à la figure 3, la face supérieure de la pièce amortissante (3) comporte une couche d'un adhésif sensible à la pression (12). De préférence, la pièce amortissante présente un grammage surfacique compris entre 6 et 15 Kg/m² et consiste en une plaque de masse lourde bitumeuse dite IFF selon l'acronyme de « Insonorisant Fusible en Feuille », qui peut avantageusement comporter des charges minérales et/ou des charges magnétiques.

Par ailleurs, en référence à la figure 3, l'élément de toit suivant l'invention comporte un film protecteur (13) coiffant les bandes d'adhésif sensible à la pression (8) déposées sur la face supérieure de la pièce en carton ondulé (2) et la couche d'adhésif sensible à la pression (12) de la face supérieure de la pièce amortissante (3). Ledit film protecteur (13) consiste dans une feuille de papier siliconée ou dans tout autre film protecteur équivalent bien connu de l'homme du métier. On notera que l'élément de toit suivant l'invention ne comporte ainsi qu'un seul film protecteur (13) à retirer préalablement à la pose de l'élément de toit ce qui facilite sa pose et réduit la pollution du lieu de montage.

On expliquera maintenant le procédé de fabrication de l'élément de toit suivant l'invention.

A partir d'une pièce de carton ondulé (2) à simple cannelure préalablement découpée à la forme requise, en l'espèce une forme sensiblement rectangulaire, on procède à la découpe d'une forme centrale à partir de moyens de découpe adaptés à travers la couverture supérieure (5). La forme ainsi découpée est alors écrasée jusqu'à la couverture inférieure (7) pour former un creux (4) dans la pièce de carton ondulé (2). Une pluralité de bandes d'adhésif sensible à la pression (8) est déposée sur la face supérieure de ladite pièce en carton ondulé (2), c'est-à-dire sur la couverture supérieure (5), et sur la paroi de fond du creux (4). Ensuite, la pièce amortissante (3) est positionnée dans le creux (4) et le film protecteur (13) est déposé pour coiffer les bandes d'adhésif sensible à la pression (8) déposées sur la face supérieure de la pièce en carton ondulé (2) et la couche d'adhésif sensible à la pression (12) de la face supérieure de la pièce amortissante (3).

On notera que les bandes d'adhésif (8) à double faces sont posées avec un film protecteur protégeant la face supérieure desdites bandes, puis le film protecteur de chacune desdites bandes d'adhésif (8) à double face est retiré préalablement au dépôt du film protecteur (13) couvrant la totalité de la surface de la pièce en carton ondulé (2).

Il va de soi que les bandes d'adhésif (8) à double face pourront être déposées sans leur film protecteur par tout procédé de transfert bien connu de l'homme du métier, permettant de retirer le film protecteur lors de la pose, sans pour autant sortir du cadre de l'invention.

Enfin, il est bien évident que les exemples que l'on vient de donner ne sont que des illustrations particulières en aucun cas limitatives quant aux domaines d'application de l'invention.

## Revendications

1. Elément de toit, en particulier panneau intérieur de plafond pour un toit de véhicule, pour améliorer la rigidité dudit toit comportant une pièce en carton ondulé (2) et au moins une pièce dite amortissante (3) apte à absorber les vibrations, ladite pièce amortissante (3) étant solidaire de la pièce en carton ondulé (2), ***caractérisé* en ce que** ladite pièce en carton ondulé (2) est obtenue dans du carton ondulé à simple cannelure d'épaisseur comprise entre 2 et 6 mm, de coefficient d'ondulation compris entre 1,35 et 1,70, comprenant 120 à 180 cannelures au mètre et dont la somme des grammages de la couverture inférieure (7) et de la couverture supérieure (5) est comprise entre 200 et 635 g/m², et dans lequel est formé au moins un creux (4), ladite pièce amortissante (3) s'étendant dans ledit creux (4).

2. Elément de toit suivant la revendication 1 ***caractérisé* en ce que** la couverture supérieure (5) de la pièce en carton ondulé (2) présente un grammage surfacique supérieur au grammage surfacique de la couverture inférieure (7) de la pièce en carton ondulé (2).

3. Elément de toit suivant l'une quelconque des revendications 1 ou 2 ***caractérisé* en ce que** la résistance à l'absorption d'eau mesurée selon la méthode ISO 535:2014 publiée en mars 2014 de l'indice Cobb1800 est inférieure à 155 g/m2 sur chacune des faces du carton.

4. Elément de toit suivant l'une quelconque des revendications 1 à 3 ***caractérisé* en ce que** la résistance à l'absorption d'eau mesurée selon la méthode ISO 535:2014 publiée en mars 2014 de l'indice Cobb300 est inférieure à 70 g/m2 sur chacune des faces du carton.

5. Elément de toit suivant l'une quelconque des revendications 1 à 4 ***caractérisé* en ce que** la charge maximale à la pliure du carton mesurée selon la méthode de résistance en flexion 3 points D41 5110 publiée par PSA le 11/1/1982 est supérieure à 20 N.

6. Elément de toit suivant l'une quelconque des revendications 1 à 5 ***caractérisé* en ce que** la résistance à la flamme mesurée selon la méthode de la combustibilité horizontale D45 1333 publiée par PSA le 03/12/2003 ou FMVSS 302 publiée le 24 septembre 1998 est inférieure à 100 mm/min dans les sens longitudinal et transversal.

7. Elément de toit suivant l'une quelconque des revendications 1 à 6 ***caractérisé* en ce que** la pièce en carton ondulé (2) comporte une pluralité de bandes d'adhésif sensible à la pression (8) déposées sur la face supérieure de ladite pièce en carton ondulé (2) et sur la paroi de fond du creux (4) recevant la pièce amortissante.

8. Elément de toit suivant l'une quelconque des revendications 1 à 7 ***caractérisé* en ce que** la face supérieure de la pièce amortissante (3) comporte une couche d'un adhésif sensible à la pression.

9. Elément de toit suivant l'une quelconque des revendications 1 à 8 ***caractérisé* en ce que** la pièce amortissante (3) présente un grammage surfacique compris entre 4 et 15 Kg/m².

10. Elément de toit suivant l'une quelconque des revendications 1 à 9 ***caractérisé* en ce que** la pièce amortissante (3) consiste en une plaque de masse lourde bitumeuse.

11. Elément de toit suivant la revendication 10 ***caractérisé* en ce que la** plaque bitumeuse comporte des charges minérales et/ou des charges magnétiques.

12. Elément de toit suivant les revendications 7 et 8 ***caractérisé* en ce qu**'il comporte un film protecteur (13) coiffant les bandes d'adhésif sensible à la pression (8) déposées sur la face supérieure de la pièce en carton ondulé (2) et la couche d'adhésif sensible à la pression de la face supérieure de la pièce amortissante (3).

13. Elément de toit suivant la revendication 12 ***caractérisé* en ce que le** film protecteur (13) consiste dans une feuille de papier siliconée.

14. Elément de toit suivant l'une quelconque des revendications 1 à 13 ***caractérisé* en ce que** le creux (4) est formé dans la pièce en carton ondulé (2) par une découpe dans la couverture supérieure (5) de la pièce en carton ondulé et par un écrasement de la partie découpée jusqu'à la couverture inférieure (7).

15. Elément de toit suivant l'une quelconque des revendications 7 à 14 ***caractérisé* en ce que** les bandes d'adhésif sensible à la pression (8) consistent dans des bandes d'adhésif comportant une première couche d'adhésif sensible à la pression (9), une couche en mousse (10) et une seconde couche d'adhésif sensible à la pression (11).

16. Elément de toit suivant la revendication 15 ***caractérisé* en ce que** la couche de mousse (10) présente une épaisseur comprise entre 500 et 1300 µm.

17. Elément de toit suivant l'une quelconque des revendications 15 ou 16 ***caractérisé* en ce que** les couches d'adhésif sensible à la pression (8) présentent une épaisseur comprise entre 50 et 100 µm.

18. Elément de toit suivant l'une quelconque des revendications 15 à 17 ***caractérisé* en ce que** la couche de mousse (10) présente une densité comprise entre 40 Kg/m³ et 160 Kg/m³.

19. Elément de toit suivant l'une quelconque des revendications 15 à 18 ***caractérisé* en ce que** la couche de mousse (10) est obtenue dans de la mousse de Polyéthylène (PE) à cellules fermées réticulée physique.

20. Elément de toit suivant l'une quelconque des revendications 15 à 19 ***caractérisé* en ce que** les couches d'adhésif sensible à la pression (8) sont obtenues dans un adhésif acrylique à base solvant auto-réticulant.

21. Elément de toit suivant l'une quelconque des revendications 15 à 20 ***caractérisé* en ce que** les bandes d'adhésif sensible à la pression (8) présentent une résistance en traction-cisaillement avant vieillissement supérieure ou égale à 0,1 MPa.

22. Elément de toit suivant l'une quelconque des revendications 15 à 21 ***caractérisé* en ce que** les bandes d'adhésif sensible à la pression (8) présentent une résistance en traction-cisaillement après vieillissement supérieure ou égale à 0.2 MPa.

## Patentansprüche

1. Dachelement, insbesondere innere Deckenplatte für ein Fahrzeugdach, um die Steifigkeit des Dachs zu verbessern, das ein Teil aus Wellpappe (2) und mindestens ein dämpfend genanntes Teil (3), das geeignet ist, die Schwingungen zu absorbieren, umfasst, wobei das dämpfende Teil (3) fest mit dem Teil aus Wellpappe (2) verbunden ist, **dadurch *gekennzeichnet*, dass** das Teil aus Wellpappe (2) aus einer Wellpappe mit einfacher Welle mit einer Stärke, die zwischen 2 und 6 mm liegt, erhalten wird, mit einem Einzugsfaktor zwischen 1,35 und 1,70, die 120 bis 180 Wellen pro Meter umfasst, und deren Summe der Flächengewichte der unteren Abdeckung (7) und der oberen Abdeckung (5) zwischen 200 und 635 g/m² liegt, und in der mindestens eine Vertiefung (4) gebildet ist, wobei sich das dämpfende Teil (3) in der Vertiefung (4) erstreckt.

2. Dachelement nach Anspruch 1, **dadurch *gekennzeichnet*, dass** die obere Abdeckung (5) des Teils aus Wellpappe (2) ein oberflächenbezogenes Flächengewicht aufweist, das größer ist als das oberflächenbezogene Flächengewicht der unteren Abdeckung (7) des Teils aus Wellpappe (2).

3. Dachelement nach einem der Ansprüche 1 oder 2, **dadurch *gekennzeichnet*, dass** die Wasserabsorptionsbeständigkeit, gemessen gemäß dem Verfahren ISO 535:2014, veröffentlicht im März 2014, des Cobb 1800-Index auf jeder der Flächen der Pappe kleiner ist als 155 g/m2.

4. Dachelement nach einem der Ansprüche 1 bis 3, **dadurch *gekennzeichnet*, dass** die Wasserabsorptionsbeständigkeit, gemessen gemäß dem Verfahren ISO 535:2014, veröffentlicht im März 2014, des Cobb-300-Index, auf jeder der Flächen der Pappe kleiner als 70 g/m2 ist.

5. Dachelement nach einem der Ansprüche 1 bis 4, **dadurch *gekennzeichnet*, dass** die maximale Faltlast der Pappe, gemessen gemäß dem 3-Punkte-Biegefestigkeitsverfahren D41 5110, veröffentlicht von PSA am 11.01.1982, größer ist als 20 N.

6. Dachelement nach einem der Ansprüche 1 bis 5, **dadurch *gekennzeichnet*, dass** die Flammsicherheit, gemessen gemäß dem Verfahren der horizontalen Brennbarkeit D45 1133, veröffentlicht von PSA am 03.12.2003, oder FMVSS 302, veröffentlicht am 24. September 1998, kleiner ist als 100 mm/Min. in die Längs- und Querrichtung.

7. Dachelement nach einem der Ansprüche 1 bis 6, **dadurch *gekennzeichnet*, dass** das Teil aus Wellpappe (2) eine Vielzahl druckempfindlicher Klebstoffbänder (8) umfasst, die auf der oberen Fläche des Teils aus Wellpappe (2) und auf der Bodenwand der Vertiefung (4), die das dämpfende Teil erhält, aufgebracht sind.

8. Dachelement nach einem der Ansprüche 1 bis 7, **dadurch *gekennzeichnet*, dass** die obere Fläche des dämpfenden Teils (3) eine Schicht aus einem druckempfindlichen Klebstoff umfasst.

9. Dachelement nach einem der Ansprüche 1 bis 8, **dadurch *gekennzeichnet*, dass** das dämpfende Teil (3) ein oberflächenbezogenes Flächengewicht zwischen 4 und 15 kg/m² aufweist.

10. Dachelement nach einem der Ansprüche 1 bis 9, **dadurch *gekennzeichnet*, dass** das dämpfende Teil (3) aus einer bituminösen Platte mit schwerem Gewicht besteht.

11. Dachelement nach Anspruch 10, **dadurch *gekennzeichnet*, dass** die bituminöse Platte Mineralfüllungen und/oder magnetische Füllungen umfasst.

12. Dachelement nach den Ansprüchen 7 und 8, **dadurch *gekennzeichnet*, dass** es eine Schutzfolie (13) umfasst, die auf den druckempfindlichen Klebstoffbändern (8), die auf der oberen Fläche des Teils aus Wellpappe (2) aufgebracht sind, und der druckempfindlichen Klebstoffschicht der oberen Fläche des dämpfenden Teils (3) sitzt.

13. Dachelement nach Anspruch 12, **dadurch *gekennzeichnet*, dass** die Schutzfolie (13) aus einem Silikonpapierblatt besteht.

14. Dachelement nach einem der Ansprüche 1 bis 13, **dadurch *gekennzeichnet*, dass** die Vertiefung (4) in dem Teil aus Wellpappe (2) durch einen Ausschnitt in der oberen Abdeckung (5) des Teils aus Wellpappe und durch ein Zerdrücken des ausgeschnittenen Teils bis zu der unteren Abdeckung (7) gebildet ist.

15. Dachelement nach einem der Ansprüche 7 bis 14, **dadurch *gekennzeichnet*, dass** die druckempfindlichen Klebstoffbänder (8) aus Klebstoffbändern bestehen, die eine erste druckempfindliche Klebstoffschicht (9), eine Schaumstoffschicht (10) und eine zweite druckempfindliche Klebstoffschicht (11) umfassen.

16. Dachelement nach Anspruch 15, **dadurch *gekennzeichnet*, dass** die Schaumstoffschicht (10) eine Stärke zwischen 500 und 1300 µm aufweist.

17. Dachelement nach einem der Ansprüche 15 oder 16, **dadurch *gekennzeichnet*, dass** die druckempfindlichen Klebstoffbänder (8) eine Stärke zwischen 50 und 100 µm aufweisen.

18. Dachelement nach einem der Ansprüche 15 bis 17, **dadurch *gekennzeichnet*, dass** die Schaumstoffschicht (10) eine Dichte zwischen 40 kg/m³ und 160 kg/m³ aufweist.

19. Dachelement nach einem der Ansprüche 15 bis 18, **dadurch *gekennzeichnet*, dass** die Schaumstoffschicht (10) aus einem geschlossenzelligen physisch vernetzten Polyethylenschaumstoff (PE) erhalten wird.

20. Dachelement nach einem der Ansprüche 15 bis 19, **dadurch *gekennzeichnet*, dass** die druckempfindlichen Klebstoffbänder (8) aus einem Acrylklebstoff mit selbstvernetzender Lösemittelbasis erhalten werden.

21. Dachelement nach einem der Ansprüche 15 bis 20, **dadurch *gekennzeichnet*, dass** die druckempfindlichen Klebstoffbänder (8) eine Zug-/Scherfestigkeit vor Alterung größer oder gleich 0,1 MPa aufweisen.

22. Dachelement nach einem der Ansprüche 15 bis 21, **dadurch *gekennzeichnet*, dass** die druckempfindlichen Klebstoffbänder (8) eine Zug-/Scherfestigkeit nach Alterung größer oder gleich 0,2 MPa aufweisen.

## Claims

1. Roof element, in particular inner ceiling panel for a vehicle roof, to improve the rigidity of said roof comprising a corrugated cardboard part (2) and at least one so-called damping part (3), capable of absorbing the vibrations, said damping part (3) being integral with the corrugated cardboard part (2), ***characterised* in that** said corrugated cardboard part (2) is obtained in the corrugated cardboard with one single slot of thickness comprised between 2 and 6mm, of wave coefficient comprised between 1.35 and 1.70, comprising 120 to 180 slots per metre, and of which the sum of the grammages of the lower cover (7) and of the upper cover (5) is comprised between 200 and 635g/m², and wherein is formed at least one cavity (4), said damping part (3) extending into said cavity (4).

2. Roof element according to claim 1, ***characterised* in that** the upper cover (5) of the corrugated cardboard part (2) presents a surface grammage greater than the surface grammage of the lower cover (7) of the corrugated cardboard part (2).

3. Roof element according to any one of claims 1 or 2, ***characterised* in that** the resistance to water absorption measured according to the ISO 535:2014 method published in March 2014 of the index Cobb1800 is less than 155g/m2 on each of the faces of the cardboard.

4. Roof element according to any one of claims 1 to 3, ***characterised* in that** the resistance to water absorption measured according to the ISO 535:2014 method published in March 2014 of the index Cobb300 is less than 70g/m2 on each of the faces of the cardboard.

5. Roof element according to any one of claims 1 to 4, ***characterised* in that** the maximum load to the folding of the cardboard, measured according to the 3-point bending resistance method D41 5110 published by PSA on 11/01/1982 is greater than 20N.

6. Roof element according to any one of claims 1 to 5, ***characterised* in that** the flame resistance measured according to the horizontal combustibility method D45 1333 published by PSA on 03/12/2003 or FMVSS 302 published on 24 September 1998 is less than 100mm/min in the longitudinal and transversal directions.

7. Roof element according to any one of claims 1 to 6, ***characterised* in that** the corrugated cardboard part (2) comprises a plurality of pressure-sensitive adhesive strips (8), deposited on the upper face of said corrugated cardboard part (2) and on the bottom wall of the cavity (4) receiving the damping part.

8. Roof element according to any one of claims 1 to 7, ***characterised* in that** the upper face of the damping part (3) comprises a pressure-sensitive adhesive layer.

9. Roof element according to any one of claims 1 to 8, ***characterised* in that** the damping part (3) presents a surface grammage comprised between 4 and 15kg/m².

10. Roof element according to any one of claims 1 to 9, ***characterised* in that** the damping part (3) consists in a heavy mass bitumen plate.

11. Roof element according to claim 10, ***characterised* in that** the bitumen plate comprises mineral fillers and/or magnetic fillers.

12. Roof element according to claims 7 and 8, ***characterised* in that** it comprises a protective film (13) covering the pressure-sensitive adhesive strips (8), arranged on the upper face of the corrugated cardboard part (2) and the pressure-sensitive adhesive layer of the upper face of the damping part (3).

13. Roof element according to claim 12, ***characterised* in that** the protective film (13) consists in a sheet of silicone paper.

14. Roof element according to any one of claims 1 to 13, ***characterised* in that** the cavity (4) is formed in the corrugated cardboard part (2) by a cut-out in the upper cover (5) of the corrugated cardboard part and by a flattening of the cut-out portion to the lower cover (7).

15. Roof element according to any one of claims 7 to 14, ***characterised* in that** the pressure-sensitive adhesive strips (8) consist of adhesive strips comprising a first pressure-sensitive adhesive layer (9), a foam layer (10) and a second pressure-sensitive adhesive layer (11).

16. Roof element according to claim 15, ***characterised* in that** the foam layer (10) presents a thickness comprised between 500 and 1300µm.

17. Roof element according to any one of claims 15 or 16, ***characterised* in that** the pressure-sensitive adhesive layers (8) present a thickness comprised between 50 and 100µm.

18. Roof element according to any one of claims 15 to 17, ***characterised* in that** the foam layer (10) presents a density comprised between 40kg/m³ and 160kg/m³.

19. Roof element according to any one of claims 15 to 18, ***characterised* in that** the foam layer (10) is obtained in the polyethylene (PE) foam with physical cross-linked closed cells.

20. Roof element according to any one of claims 15 to 19, ***characterised* in that** the pressure-sensitive adhesive layers (8) are obtained in an acrylic adhesive with a self-cross-linking solvent base.

21. Roof element according to any one of claims 15 to 20, ***characterised* in that** the pressure-sensitive adhesive strips (8) present a traction/shearing resistance before ageing greater than or equal to 0.1MPa.

22. Roof element according to any one of claims 15 to 21, ***characterised* in that** the pressure-sensitive adhesive strips (8) present a traction/shearing resistance after ageing greater than or equal to 0.2MPa.
